# EUROPEAN PATENT APPLICATION

(11) **EP 2 735 475 A1**
(43) Date of publication of application: **28.05.2014**
(21) Application number: 13193417.6
(22) Date of filing: 19.11.2013
(51) Int. Cl.: B60P 1/64

(54) **Arrangement and method for loading platform onto transport frame**

(30) Priority: 22.11.2012 FI 20126224
(71) Applicant: Myllylä, Ilkka, 85100 Kalajoki (FI); Myllylä, Kauno, 85100 Kalajoki (FI)
(72) Inventor: Myllylä, Ilkka, 85100 Kalajoki (FI); Myllylä, Kauno, 85100 Kalajoki (FI)
(74) Representative: Kolster Oy Ab

(57) **Abstract**

An arrangement and method for loading a platform (5), the arrangement comprising a transport frame (1), a tipping intermediate frame (4) articulated to a rear edge (2) of the transport frame by at least one pivot shaft (3) and wheels (7) of the transport frame. The platform is arranged onto support means (22, 23) and the transport frame is reversed underneath the platform resting on the support means. As a result of the reversing movement, the rear part (25) of the platform is lifted off the support. Next, the front part (24) of the platform is raised by the tipping device of the intermediate frame and the intermediate frame is locked to the platform. Finally, the support means of the platform that have been lifted from the ground (8) because of the lifting movement are removed.

## Description

### Background of the invention

The invention relates to an arrangement as claimed in the preamble of claim 1 for loading a platform onto a transport frame.

The invention also relates to a method as claimed in the preamble of claim 7 for loading a platform onto a transport frame.

Prior art knows, among other things, the use of what are known as hook lift systems for platform changes where speed is required. When a prior art hook lift system is used, a lifting hook provided in the transport frame is arranged through a lifting lug provided in the platform, the platform being then guided onto the transport frame with the aid of rolls provided in the transport frame. Use of the hook lift system for placing the platform onto the transport frame requires that one point of the transport frame and one point of the platform are aligned simultaneously, as this facilitates the adjustment significantly. However, a hook lift system is a heavy structure and thus increases the empty weight of the vehicle typically by 2000 kg compared to a vehicle provided with a fixed platform. Moreover, the purchase price of the hook lift system in question is considerably high.

On the other hand, prior art also knows a solution in which a platform with support legs is arranged onto a transport frame. However, this kind of solution requires the transport frame to be aligned with the platform on a vertical plane. The alignment of the transport frame and the platform to be mounted thereon requires mutual alignment of both the fastening points at the front part of the platform and the fastening points at the rear part of the platform.

To facilitate the alignment of a platform placed on support legs, the transport frame to be fastened to it is often provided with different guides guiding the transport frame to a correct position when it is being driven backwards underneath the platform. The guide in question is formed for example by an intermediate frame attached to the transport frame and guided between platform guides of a standard transport platform when the transport frame is being driven backwards underneath the platform to be attached. Nevertheless, the reversing of the transport frame underneath the transport platform is extremely challenging, because when being driven backwards and guided underneath the platform, the transport frame must be kept almost parallel to the platform. Otherwise the friction between the transport frame and the platform surfaces guided onto it exceed the friction between the support legs and the base, and the platform is pushed from its position along with the transport frame. Alternatively, the load acting on the support legs may become too high in relation to their durability, and they become bent or otherwise broken.

Naturally, it is possible to guide the transport frame entirely or partly underneath the platform provided with support legs, without guides that set against the platform being provided. This type of solution requires, however, extremely precise steering of the transport frame because it must be brought both parallel with the platform and, at the same time, precisely in line with the fastening points provided therein.

The final mounting of the platform provided with support legs also requires lifting the transport frame in order to align the fastening points in the platform with those in the transport frame. At the same time it must be possible to lift the platform to a sufficiently high level so that the support legs of the platform detach from the base and may be removed. The transport frame is provided with a hydraulic or pneumatic suspension to allow it to be lifted when the platform is being arranged in place. In particular, hydraulic draw bar adjustment of tractor trailers or an intermediate frame operated by tipping cylinders in tipper trucks allow the front part of the transport frame to be raised and attached to the platform. In tractor trailers in particular, hydraulic suspension and draw bar adjustment require that the driver is constantly alert and makes adjustments according to the centre of gravity and weight of the load.

In tipping tractor trailers provided with a fixed bogie or a leaf suspension, the fastening points in the chassis are aligned with the corresponding fastening points in the platform by lowering the draw bar down, the rear part of the transport frame thus rising up and setting into hinge joints, which allows the rear support legs of the platform to be removed. As to the foremost support legs of the platform, their removal is made possible by raising the platform with the tipping device. If the platform is not provided with a separate intermediate frame controlling the movement of the tipping device, the tipping cylinder is attached to the platform by extending the tipping device and guiding it separately to its point of attachment.

In the above exemplary cases, fastening of a platform provided with support legs to a transport frame requires at least three, and, with tipping devices containing two hydraulic cylinders, at least four separate lockings. Due to the hinge length, the hinge must be locked by two separate lockings.

On the basis of the above, it is clear that prior art technical solutions involve considerable disadvantages. A particular disadvantage of a transport frame provided with an interchangeable platform in comparison with a transport frame provided with a fixed platform is the increase in weight caused by the interchangeable platform equipment, which reduces the total capacity of the vehicle combination. Moreover, because of the complex technical solutions of the prior art interchangeable platforms, their purchase price and often their servicing costs are high.

The above described simpler interchangeable platform solutions, in turn, render platform changing both a time-consuming and complex process which, due to its complexity, is prone to errors. In fact, uneconomical use of working time related to these solutions causes financial losses.

### Brief description of the invention

The object of the present invention is, thus, to develop an arrangement and a method that allow a completely novel solution to be reached to the above-mentioned problems caused by prior-art drawbacks.

This object is achieved in such a manner that the arrangement and method for loading a platform onto a transport frame are, in accordance with the present invention, provided with the characteristic features defined in the claims. In particular, the present problems may be solved by combining the characteristics to provide an arrangement as disclosed in the characterizing part of claim 1. On the other hand, the problems may be solved also by combining the characteristics to provide a method as claimed in the characterizing part of claim 7.

Preferred embodiments of the invention are disclosed in the dependent claims.

The invention is based on the idea that a platform is arranged onto a transport frame and locked thereto by utilizing specific reception means together with a tipping intermediate frame provided in the transport frame.

In the context of the present invention, the term "transport frame" refers both to a truck or a similar vehicle receiving a platform and to a frame of a trailer fastened to a towing vehicle, such as a truck or a tractor.

The terms "above", "below", and so forth used in the specification illustrate the features of the invention in the directions that are relative to the arrangement and the method of the invention as presented in the attached figures for loading a platform onto a transport frame.

The invention provides considerable advantages. Hence the above structural solution for loading a platform onto a transport frame increases the total weight of the vehicle not more than by 150 to 300 kg, depending on the size of the vehicle, in comparison with a vehicle provided with a fixed platform. This is only about one tenth of the weight of hook lift equipment and the stronger frame structure required by it. Consequently, the influence of the arrangement now disclosed to the capacity of the vehicle is as small as possible.

According to the solution of the invention, there is no need to provide the transport frame of the vehicle with a specific suspension or other lifting arrangements to join together the fastening points between the platform and the transport frame or to raise the platform for detaching or installing support means, such as support legs. According to the arrangement and method of a preferred embodiment of the invention, the alignment of the fastening points between the platform and transport frame is easy because of a stepwise alignment of the platform. In that case, the rear part of the platform attaches first to the intermediate frame of the transport frame after which the platform may be aligned and its front part fastened in a separate step.

According to this preferred embodiment, one manually fastened mechanical joint is in fact sufficient for locking the platform to the transport frame. In addition, because of this single simple locking of the platform, the vehicle is safe to use.

When the present invention is being used, the support means of the platform are unlikely to become damaged, because the platform moves freely on the transport frame supported by the reception means provided therein. Irregularities of the ground in the working area do not complicate the changing of the platform much either, as the platform is supported by the transport frame during the alignment.

The solution of the invention is applicable to changing the platform when a platform that is currently the most appropriate one for the material to be loaded is to be taken in use. Since the work phases for arranging the platform are few and simple, they reduce the time needed for changing the platform to about a half compared to other than the hook lift equipment. Moreover, the arrangement of the invention does not require any remote-controlled power source, the simple technology thus reducing the need for servicing, and financial investments for purchasing the equipment are small.

Other advantages of the invention are presented in the following in connection with a more detailed description of a particular embodiment of the invention.

### Brief description of the figures

In the following, a preferred embodiment of the invention is explained in more detail with reference to the accompanying drawing, in which
Figure 1 is a side view of a transport frame and a platform before loading;
Figure 2 shows a first step of the loading of the platform and a schematic view of an intermediate frame, with a platform guide closest to the viewer removed;
Figure 3 shows a second step of the loading of the platform and schematic view of an intermediate frame, with a platform guide closest to the viewer removed;
Figure 4 shows a third step of the loading and a schematic view of an intermediate frame;
Figure 5 shows a fourth step of the loading and a schematic view of an intermediate frame;
Figure 6 shows a fifth, and the final, step of the loading;
Figure 7 shows a partial enlargement of Figure 2;
Figure 8 is a top view of a detail of a rear locking means;
Figure 9 is a front view of a detail of a front locking means;
Figure 10 is a schematic, cross-sectional view of the rear locking means;
Figure 11 is a schematic, cross-sectional view of the front locking means; and
Figure 12 is a diagram showing the steps of the loading method.

### Detailed description of a preferred embodiment

The present figures do not show the arrangement and method of loading a platform onto a transport frame in scale but the figures are schematic, illustrating the structure and operation of the preferred embodiment in principle. Structural parts indicated by reference numerals in the accompanying figures then correspond to structural parts provided with reference numerals in this specification.

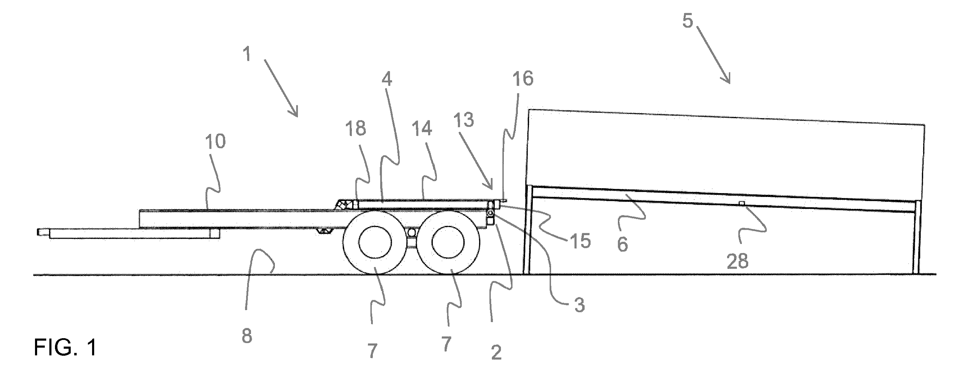

Figure 1 shows the main parts of the present arrangement, which are a transport frame 1 and a tipping intermediate frame 4 articulated to a rear edge 2 of the frame by at least one shaft 3. The intermediate frame of this type comprises a structure located mostly between longitudinal platform guides 6 provided in a platform 5 to be received. Although some of this intermediate platform may extend even wider than the platform guides, this is not particularly recommendable from a structural point of view because it has a disadvantageous effect of rising the mass centre of the vehicle. The intermediate frame may be formed of a bent plate structure or of various solid or hollow beams or booms.

Unlike in the accompanying figures, the intermediate frame 4 may extend up to the front part of the transport frame 5, all the way to the front side of the front wall of the platform 5 guided onto the transport frame. In that case the intermediate frame is preferably provided with a structure projecting upward and to the front side of the platform for the purpose of aligning the platform either in its direction of travel or in a horizontal plane when it is being fastened. The intermediate frame may be further shaped so that the bottom of the platform between the platform guides 6 rests on it. In addition, the intermediate frame may be provided with projections that project laterally and thereby underneath the platform guides, thus supporting the platform to the intermediate frame through beams forming the platform guides. This arrangement provides the intermediate frame and platform combination with a greater strength against stresses caused by the load.

The transport frame 1 further comprises wheels 7 for moving it along a ground 8, e.g. underneath the platform 5 of Figure 1.

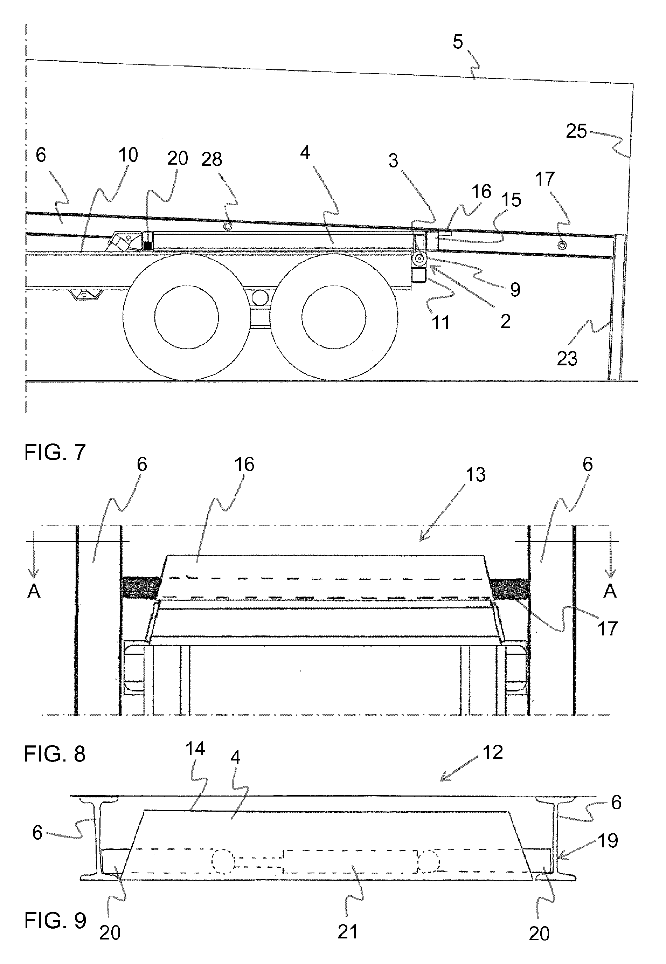

To allow the platform 5 to be received, the arrangement comprises substantially frictionless reception means 9 provided in the immediate vicinity of the rear edge 2 of the transport frame 1 and best visible in Figure 7. These are arranged to the transport frame on the opposite sides of the intermediate frame 4 articulated thereto. According to their preferred embodiment, the reception means comprise a part of a circular arc that is at least a quarter of a circle long. A first end of the circular arc in question, or its imaginary extension, substantially joins the top surface 10 of the transport frame, and its second end, or an imaginary extension thereof, substantially joins an end surface 11 at the rear edge 2 of the transport frame. A characteristic of the reception means and the circular arc it forms is that its centre point is on the centre line of at least one pivot shaft 3 between the intermediate frame and the transport frame, as shown in Figure 7, for example. In the embodiment of the figures, the reception means comprise substantially cylindrical means.

The mutual distance of the reception means 9 is further arranged to substantially correspond to the mutual distance of the platform guides 6 of the platform 5, the reception means of the transport frame 1 to be guided underneath the platform being thus brought into contact with these platform guides.

In accordance with the above, the reception means 9 may comprise a solid slide surface coated so as to be frictionless. Because of the mass of the platform 5 in relation to the surface area of the supported slide surface and impacts to the slide surface when the platform is being arranged onto the transport frame 1, probably the only economical alternative for the slide surface material is steel. However, a steel slide surface requires continuous lubrication which in agricultural use in particular is not environmentally the best possible solution because lubricant from the slide surface gets into the environment.

Hence a particularly preferred embodiment of the reception means 9 is a bearing wheel according to an embodiment of the figures, which sustains heavy loads in relation to its size and corrosion. An example of this is a steel wheel provided with a brass slide bearing. The centre point of the bearing wheel axle is preferably on the centre line of at least one pivot shaft 3 between the intermediate frame 4 and the transport frame 1. In that case the reception means and the intermediate frame may be articulated to a common shaft, although they may equally well be on shafts that are structurally separate from one another.

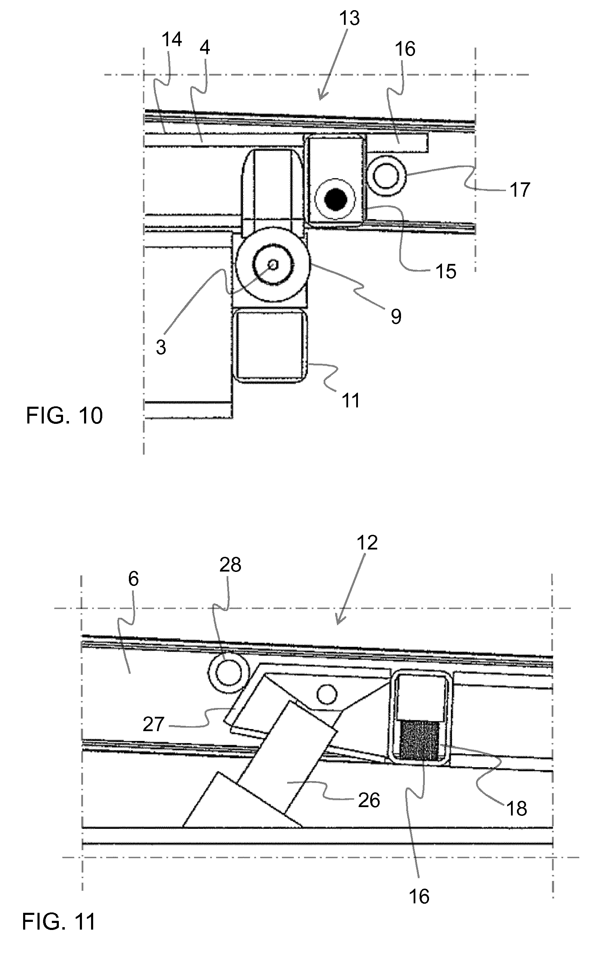

When the transport frame 1 and the platform 5 are guided against one another, reliable connecting of the platform to the transport frame must be possible. This is achievable by providing the intermediate frame 4 with suitable locking means 12 and 13 for locking the platform to be guided onto the intermediate frame to the intermediate frame. The embodiment of the figures discloses a solution in which the intermediate frame is provided with specific front locking means 12 and rear locking means 13. In that case the rear locking means 13 comprise, as shown in Figures 8 and 10, at least one projection 16 forming a counter element parallel to the top surface 14 of the intermediate frame 4 and provided on the rear edge 15 thereof. Guiding the projection in question into at least one counter means 17 provided in the platform 5 produces a shape locking that attaches the rear end of the platform securely to the transport frame.

Alternatively, the transport frame 1 may be guided underneath the platform 5 by bringing the rear edge of the intermediate frame 4 of the transport frame into contact with the counter means 17 provided in the platform. This aligns the fastening points in the platform and the transport frame automatically with one another, thus allowing the platform to be fastened to the transport frame.

Another feasible option is that the intermediate frame 4 is extended in the above-described manner all the way to the front part of the platform 5 and that the front part of the intermediate frame is provided with an upward extending projection. In other words, when the platform is being guided onto the intermediate frame, the projection in question will set against the front part of the platform. Extending the intermediate frame in this manner is favoured by the reduced need to reinforce or use reinforced platforms of standard dimensions. The locking system arranged to the front side of the platform may be considered a further advantage of this solution, because a simple shape locking combined with a mechanical lock is easy for the user to reach and use.

For final fastening of the platform 5 to the transport frame 1, the front locking means 12 comprise slots 18 made to the intermediate frame 4, with corresponding slots 19 arranged to the platform guides, as shown in Figures 9 and 11. At least one locking beam 20 is arranged into these slots that are to be aligned with one another.

A locking beam 20 according to a second embodiment of the front and/or rear locking means is formed by pressure-medium-operated locking pins controlled by one or more hydraulic cylinders 21, as disclosed in Figure 9. The locking pins project from the intermediate frame, as shown in Figure 9, and are guided further into slots 19 provided in both platform guides 6 on opposite sides of the intermediate frame 4. An advantage of the pressure-medium-operated locking is that appropriately shaped locking pins are guided by force to their desired end position.

These pressure-medium-operated locking pins as such may form the above-described front locking means 12, although they may also form the only locking means of the present arrangement. By leaving the rear locking means 13 out and making the intermediate frame 4 in the form of a substantially rectangular frame without projections, it is even possible to arrange the pressure-medium-operated locking pins substantially in the centre area of the intermediate frame, where they are alone capable of locking the platform 5 reliably to the transport frame 1.

To facilitate the alignment of the platform 5 with the transport frame 1, side beams provided in the intermediate frame 4 or a box section, or the like, formed by it are arranged to comprise an at least partly wedged shape tapering towards the rear edge 2 of the transport frame, as shown in Figure 9. The intermediate frame is thus easy to centre between the platform guides 6.

It is also possible to make the intermediate frame 4 clearly narrower than the gap between the platform guides 6, in which case its wedge-shaped form that tapers towards the platform 5 is achieved by specific guide surfaces. When lifted towards the platform, the intermediate frame thus centres itself automatically between the platform guides.

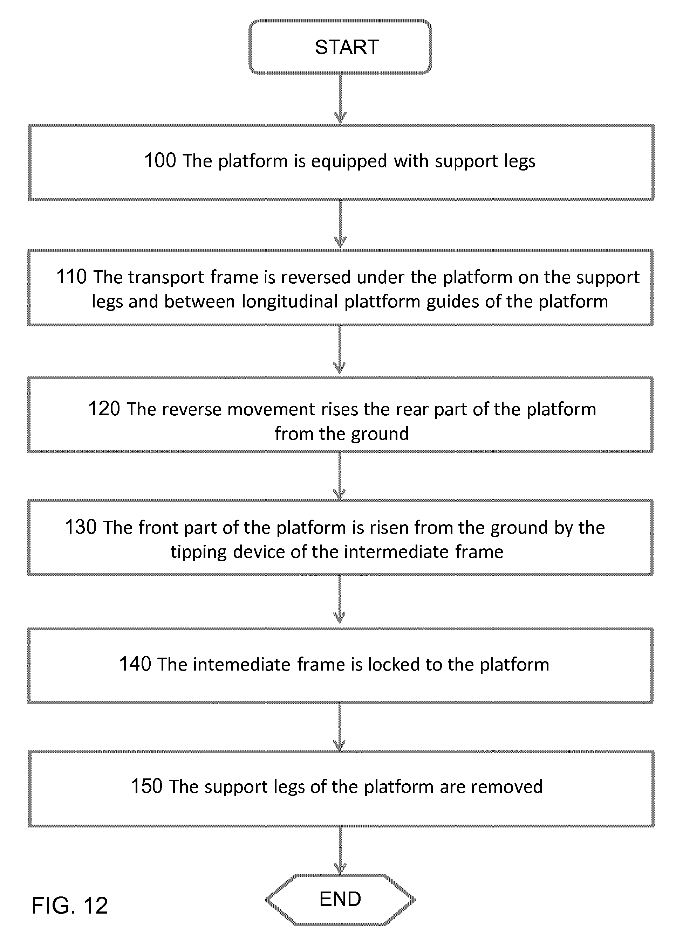

The present method for loading the platform 5 onto the transport frame 1 involves the following steps presented in Figures 1 to 6 and 12.

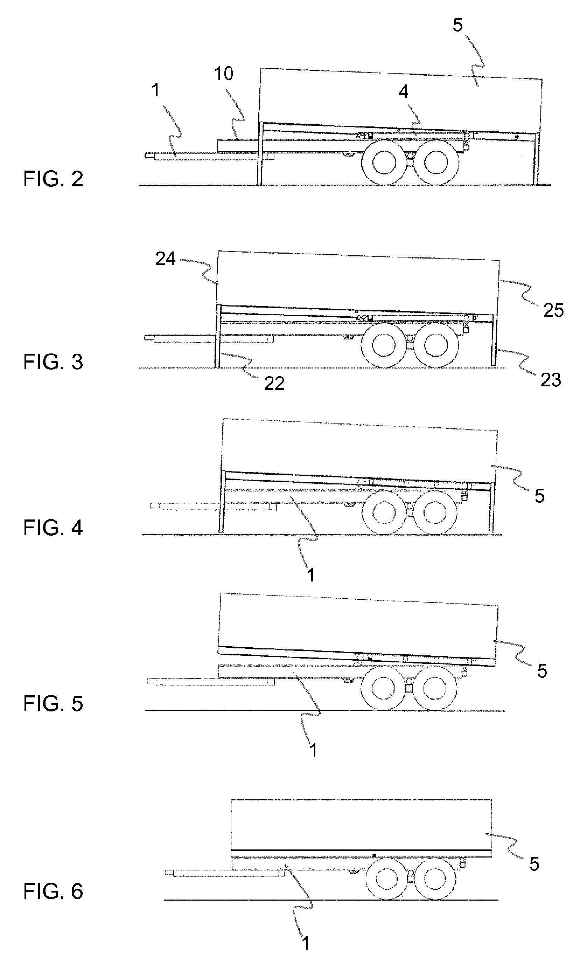

The transport frame of Figure 1 is thus driven backwards in step 100 of Figure 2 underneath the platform supported by front and rear support legs 22 and 23 that form the support means, the intermediate frame 4 of the transport frame being guided between the longitudinal platform guides 6, step 110, provided in the platform. Usually the intermediate frame then slides along the platform for a distance that is about one third of the platform length. This allows the rear support legs to rise sufficiently high in order to be detached from the platform. To achieve this, the platform is supported by the support means 22 and 23 in such a manner that the platform guides at the front part 24 of the platform are higher up than the substantially frictionless reception means 9 provided in the transport frame and arranged on opposite sides of the intermediate frame. At the same time the platform guides at the rear part 25 of the platform are below the highest point of the reception means.

Since transport frames 1 are usually provided with air-filled rubber tyres 7 that compress by a weight acting on them, a significantly steep angle is required between the platform 5 and the transport frame for lifting the rear support legs 22 from the ground 8. Alternatively, the platform and the transport frame must slide for a relatively long distance in relation to one another to achieve a sufficient lift. The steep angle of incident mentioned first is not the best possible choice, because in that case the front support legs 23 of the platform become too heavy and long to handle.

However, to allow the rear support legs 22 to be removed, the platform 5 must slide for a considerable distance supported by the transport frame 1 for the effect of the compression of the wheels 7 to be compensated for and to allow the rear support legs to rise sufficiently high from the ground surface, which is often uneven, in order to be removed without hindrance. The reversing movement of the transport frame 1 continues so that the substantially frictionless reception means 9 provided in the transport frame and arranged to opposite sides of the intermediate frame 4 come in contact with the guides 6 in the platform 5 and the further continuing reversing movement raises the rear part 25 of the platform, detaching at the same time the support legs 23 provided therein from the ground 8, as shown in Figure 3 and step 120. Because of the small friction between the reception means and the platform guides, the platform stays in place during the reversing movement of the transport frame.

The rear part 25 of the platform 5 now rests on the reception means 9 and the front part 24 of the platform is supported onto the ground 8 through the support legs 22 at the front part of the platform.

The friction formed by the support legs 22 of the front part 24 of the platform 5 with the ground 8 keeps the platform in place as the reversing movement continues. As the reversing movement thus continues, the projection 16 of the rear locking means 13 preferably provided at the rear part 15 of the intermediate frame 4 is guided, assisted by the reception means 9, into alignment with the counter means 17 provided in the platform, whereby a shape-locking is produced, as shown in Figures 8 and 10. The projection and the counter means prevent the platform from rising off the reception means 9 or from moving onward in relation to the transport frame 1. The transverse beams forming the counter means may be fastened by mechanical fastenings, such as bolt joints, in which case they are easy to detach when the platform is to be used in other solutions for changing platforms.

When the platform 5 is supported by the reception means 9 of the transport frame 1, the fastening points formed by the transverse beams 17 at the rear part of the platform are thus guided into alignment with the projection 16 of the intermediate frame 4, and the transport frame may be freely steered into alignment with the slots 19 that from the foremost fastening points of the platform, without a need to separately control the rear part. In accordance with the above, when the support legs 23 of the rear part 25 are detached from the ground 8, they are no longer subjected to any stress whatsoever. The stress on the support legs 22 of the front part 24 of the platform is relieved by the platform moving in its direction of travel on the substantially frictionless reception means 19, and, because of the shape of the intermediate frame, no friction is generated between the intermediate frame and the platform.

As the rear part 25 of the platform 5 has become locked and set to the correct position in the direction of travel, the front part of the intermediate frame 4 is guided by the tipping device 26 to rise as shown in Figures 4 and 11. Because of its wedged shape, the intermediate frame thus sets between the platform guides 6. Likewise, the wedge-shaped front edge 27 of the tipping intermediate frame rests against a counter beam 28 mounted between the platform guides, making the platform immobile in its direction of travel in relation to the transport frame. As a result of the raising movement, the support legs 22 of the front part 24 of the platform detach from the ground in accordance with step 130. The front part of the tipping intermediate frame may then be locked to the platform by the front locking means 12 in step 140 and the support legs of the platform may be removed in step 150.

The platform 5 and the intermediate frame 4 may be locked together for example by arranging the locking beam 20 to travel through the slots 18 in the front part of the tipping intermediate platform, the beam being supported by the corresponding slots 19 in the platform guides, as shown in Figures 9 and 11. The locking beam is installed through a slot of at least one of the platform guides and locked by a tenon and cotter joint, for example. Since the primary purpose of the locking beam is to lock the platform in the vertical direction only, in other directions the joint may be made loose to facilitate the mounting.

It is also possible to replace the locking beam 20 by the above-described pressure-medium-operated locking pins. The locking pins may also replace the described rear part locking according to this method.

The platform 5 is detached by repeating the platform mounting steps in a reverse order. When the tipping device 26 and the front locking means 12 are released, the tipping intermediate frame 4 descends between the platform guides 6 by gravity and the platform sets onto the ground 8 supported by the support means 22 fastened to it. When the transport frame is driven away from underneath the platform, the support means 22 prevent the platform from moving while the rear locking means 13 detach from one another, and gradually it descends also onto its support means 23.

It is to be understood that the above description and the related figures are only intended to illustrate the present solution. The solution is thus not restricted to the embodiment described above or defined in the claims, but it will be obvious to a person skilled in the art that a variety of variations and modifications are possible within the scope of the idea defined in the accompanying claims.

## Claims

1. An arrangement in a platform (5), the arrangement comprising
a transport frame (1);
a tipping intermediate frame (4) articulated by at least one pivot shaft (3) to a rear edge (2) of the transport frame; and
wheels (7) on the transport frame; and
support means (22, 23) supporting the platform against a ground (8),
**characterized in that**
in its state prior to loading, the platform (5) is arranged to be partly above the intermediate frame on the support means (22, 23) so that
platform guides (6) provided at a front part (24) of the platform are higher up than substantially frictionless reception means (9) formed of bearing wheels and provided in the transport frame and on opposite sides of the intermediate frame, and lower down than the highest point of the reception means at a rear part (25) of the platform.

2. An arrangement as claimed in claim 1, **characterized in that** the intermediate frame (4) of the transport frame has a rear edge (15) that is arranged to be guided into contact with counter means (17) provided in the platform (5) so that a mutual alignment of fastening points provided in the platform and in the transport frame is achieved for fastening the platform to the transport frame.

3. An arrangement as claimed in any one of the preceding claims, **characterized in that** the centre point of the shaft of the reception means (9) is on the centre line of the at least one pivot shaft (3) between the intermediate frame (4) and the transport frame (1).

4. An arrangement as claimed in claim 3, **characterized in that** the reception means (9) and the intermediate frame (4) are articulated to the same pivot shaft (3).

5. An arrangement as claimed in any one of the preceding claims, **characterized in that** the distance between the reception means (9) substantially corresponds to the distance between the platform guides (6) in the platform (5) arranged onto the support means (22, 23).

6. An arrangement as claimed in any one of the preceding claims, **characterized in that** the intermediate frame (4) is provided with front locking means (12) that are arranged to co-operate with a counter beam (28) fastened to the platform (5) in order to arrange the platform in place in its direction of travel when the intermediate frame is being raised.

7. A method for loading a platform (5) onto a transport frame (1) formed of a tipping intermediate frame (4) articulated substantially to a rear edge (2) of the transport frame by at least one pivot shaft (3) and of wheels (7) of the transport frame, wherein
the transport frame is reversed underneath the platform (5) resting on the support means (22, 23) so that the intermediate frame is guided between (110) longitudinal platform guides (6) provided in the platform
**characterized in that**
the platform (5) is supported for the loading so that the platform guides (6) provided at a front part (24) of the platform are arranged higher up than substantially frictionless reception means (9) formed of bearing wheels and provided in the transport frame and on opposite sides of the intermediate frame, and lower down than the highest point of the reception means at a rear part (25) of the platform.
the reversing movement is continued so that the substantially frictionless reception means provided in the transport frame (1) and arranged on opposite sides of the intermediate frame (4) come into contact with the platform guides (6), and the further continuing reversing movement lifts the rear part of the platform off the support (120), after which
the rear part (25) of the platform rests on the reception means and the front part (24) of the platform rests on the ground (8) through the support means (22) provided at its front part so that
friction formed by the support legs (22) of the front part (24) with the ground keeps the platform in place as the reversing movement continues; and
the platform is gradually aligned with fastening points provided in the transport frame, the front part of the platform being raised by a tipping device of the intermediate frame that is set between the platform guides, the front part of the platform becoming thus detached from the support (130) after which
the intermediate frame is locked to the platform (140); and
the support means of the platform are removed (150).

8. A method as claimed in claim 7 for loading a platform (5) onto a transport frame (1), **characterized in that** the platform is gradually aligned with fastening points provided in the transport frame by guiding the rear edge (15) of the intermediated frame (4) of the transport frame into contact with counter means (17) provided in the platform.

9. A method as claimed in claim 7 or 8 for loading a platform (5) onto a transport frame (1), **characterized in that** the centre point on the shaft of the bearing wheel that forms the reception means (9) is arranged to a centre line of a pivot shaft (3) between the intermediate frame (4) and the transport frame (1).

10. A method as claimed in claim 9 for loading a platform (5) onto a transport frame (1), **characterized in that** a shape-locking between the intermediate frame (4) and the platform (5) sets the platform to a correct position in its direction of travel, the locking preventing the platform from being lifted off the reception means (9) or from moving in relation to the transport frame (1) in the direction of travel.

11. A method as claimed in any one of claims 7 to 10 for loading a platform (5) onto a transport frame (1), **characterized in that** the front edge (27) of the intermediate frame (4) is shaped so as to be guided in relation to a counter beam (28) fastened to the platform (5) so that when the intermediate frame is being raised, the platform sets in place in its direction of travel.
